# EUROPEAN PATENT APPLICATION

(11) **EP 2 775 024 A1**
(43) Date of publication of application: **10.09.2014**
(21) Application number: 14155500.3
(22) Date of filing: 18.02.2014
(51) Int. Cl.: D06F 37/20

(54) **Apparatus for fastening a motor to the tub of a washing machine**

(30) Priority: 07.03.2013 IT PN20130015 U
(71) Applicant: Nidec Sole Motor Corporation S.r.l., 33170 Pordenone (IT)
(72) Inventor: Daneluzzi Mauro, 33170 Pordenone (IT); Rigo Massimo, 33170 Pordenone (IT); Cossalter Daniele, 33170 Pordenone (IT)
(74) Representative: Gonella, Mario

(57) **Abstract**

Apparatus for fastening an electric motor to a tub (1) of a washing machine composed of an accommodation (2) apt at containing the electric motor (26) supported by bearings (11, 12) installed on the head surfaces of the accommodation (2); said accommodation, apt at being fastened on the outer surface of said tub (1), is composed of a principal body (6) made *en bloc* comprising a protrusion (5) and of at least a connecting bracket (8) provided with a groove (9) at its end; said accommodation (2) is united to the body of the tub (1) by means of said protrusion (5) which engages in a suitable seat (4) provided on the lateral surface of said tub (1) and by means of said brackets (8) which engage on the corresponding fastening elements (3) provided on said tub (1).

The fastening connecting elements (3) provided on the tub have dimensions and distances between centers so as to be able to accommodate the support devices for motors made according to the known prior art.

## Description

### FIELD OF APPLICATION

The present invention relates to an apparatus for fastening an electric motor to the tub of a washing machine.

### PRIOR ART TECHNIQUE

Washing machines on the market nowadays carry out washing operations thanks to the mechanical action exerted on the items to be washed by the rotation of a washing drum housed into a tub containing a solution of water and detergents.

The rotation of the washing drum is achieved by means of a belt connecting a pulley fixed on the washing drum axis to another pulley placed on the motor shaft which transfers the power produced by an electric motor.

During the years the industry of household appliances has studied and made different alternative solutions in order to fasten the motor to the tub casing. Some of these have two arms whereon some holes are made; for example in DE29708588 on the support arms there are provided seats for housing the motor shaft, while the motor is connected to said arms by means of elastic elements acting as shock absorbing means.

An alternative method for fastening the motor to the tub is described in DE1460890 where the container of the motor is suspended by means of two pins extending from the outer surface of the container and engaging with two support arms fixed on the tub side. The motor and its shaft are kept in their positions by the contrasting action of two forces: the elastic force of a spring interposed between the outer surface of the tub and that of the casing containing the motor, a force which tends to distance the rotation axis of the shaft of the electric motor from the tub, and the resisting force exerted by the belt enveloping the pulleys at the end of the shaft of said electric motor and of the shaft of the washing drum contained in the tub of the washing machine.

There are other solutions which provide the connection of one to the other of various pairs of arms whose components are fixed one on the surface of the motor casing and one either on the tub surface, see for example DE102005060362 or EP1424427, or on the counterweights anchored on the tub, see for example EP1426476.

The proposed solution described hereinafter, resumes and improves the content of patent GB190251 which proposes an arrangement for an electric motor of a clothes washing machine comprising the use of at least a bracket with seats apt at housing the fixing elements of the tub; the brackets have standardized dimensions to which the containers for an electric motor conform even though said containers have different dimensions necessary for accommodating various electric motors chosen according to the power requirements needed by the clothes washing machine model they equip.

### SUMMARY OF THE INVENTION

Object of the present utility model is that of providing an apparatus which enables to connect one to the other the tub of a clothes washing machine and an electric motor apt at activating the washing drum (not shown) of said clothes washing machine. The invention achieves such object by means of a simpler structure with respect to those of the known art.

The new apparatus entails at least two advantages: a lesser complexity of the fixing devices and consequently a reduction of the time for mounting the motor onto the tub body, with consequently a reduction of production costs. A further advantage of the provided structure, as it will be apparent from the following description, is that said structure has the possibility of housing and of fixing a plurality of motors, which are being used at present, having different dimensional characteristics, hence they have a high flexibility regarding their use.

### DESCRIPTION OF FIGURES

The figures hereinafter described are for exemplification only but not limited to and refer to a preferred embodiment of the present utility model without limiting its form and dimensions.
Fig. 1: perspective assembly view of a tub for a clothes washing machine associated with an electric motor;
Figs. 2A-2B: perspective views of the connecting devices of an electric motor to a tub of a clothes washing machine according to two possible embodiments of the present invention;
Fig. 3: partial perspective view of the tub of the clothes washing machine of Figure 2 with fixing elements and seats;
Fig. 4: perspective view of the principal body of the container of the motor of Figs 2-A, 2-B;

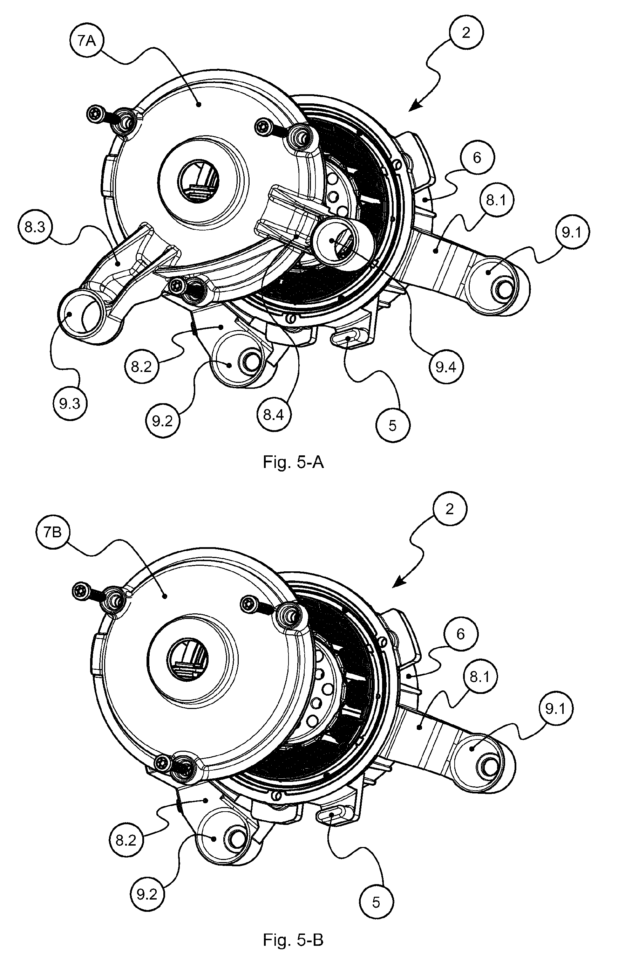

Figs. 5-A, 5-B: perspective views of the accommodations for an electric motor according to two possible embodiments of the present invention;
Fig. 6: longitudinal sectional view of the connecting apparatus according to the present invention;
Fig. 7: external lateral view of the motor of the washing machine;
Figs. 8A, 8B, and 8C: respective transverse sectional views of the motor according to lines A-A, B-B and C-C of Fig. 7.

### DETAILED DESCRIPTION OF THE INVENTION

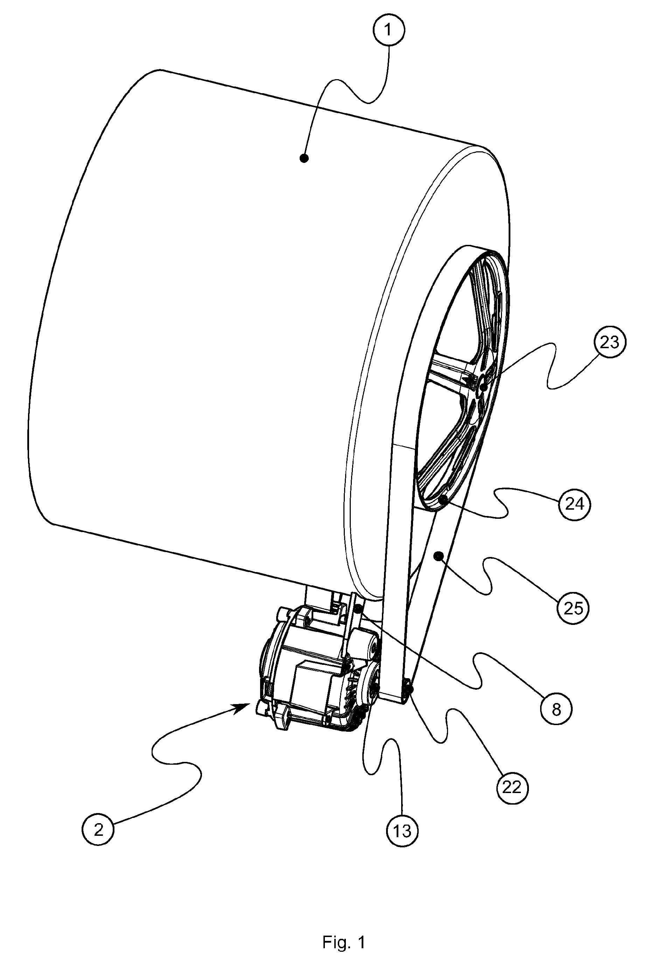

The related position of a tub 1 of a clothes washing machine and of an electric motor contained in a suitable accommodation 2 is shown in Fig. 1; conveniently, said position corresponds to that adopted by a wide part of the clothes washing machines at present on the market, because, as already said, the present invention is intended at not limiting its application field to the new containers for an electric motor but at making it possible its use for models made according to the prior technique.

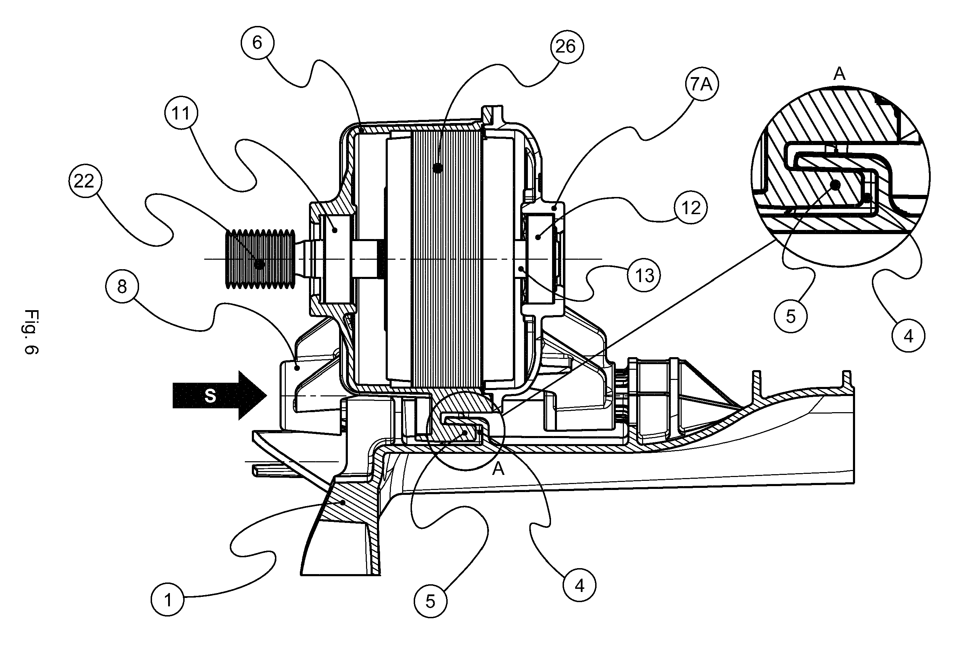

Of course, the accommodation 2 for the motor is fixed to the lower part of the tub 1 by means of connecting brackets 8 and on the shaft 13 of the motor 26 (Fig. 6) is keyed a first pulley 22. From the tub 1 axially exits, tightly, the shaft 23 of the drum containing the laundry and rotating inside the tub. On the shaft 23 a second pulley 24 is keyed. On the two pulleys 22 and 24 runs a belt 25 in order to transmit the rotation of the motor 26 to the drum of the clothes washing machine.

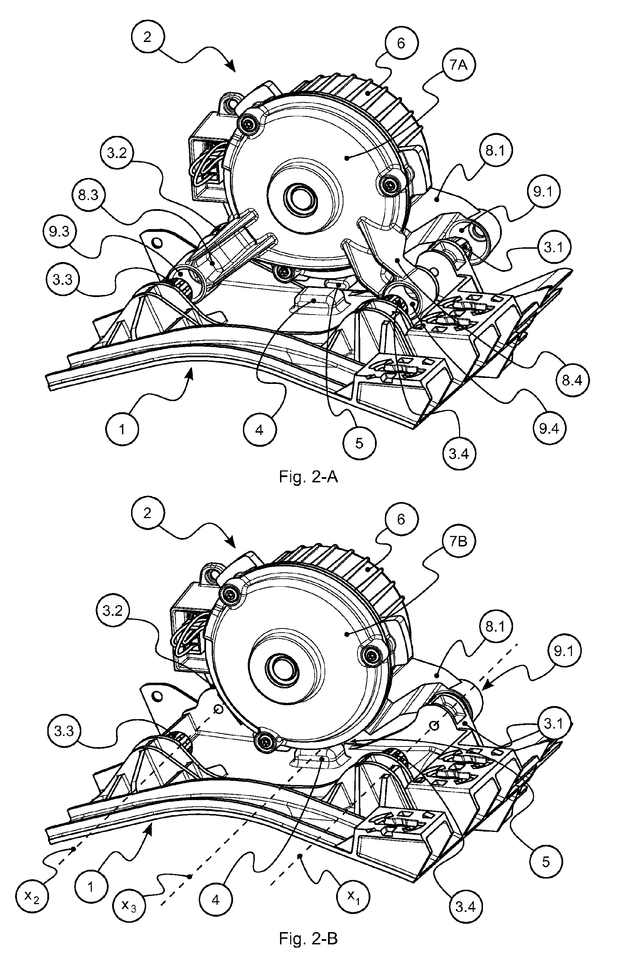

In the perspective views in Figs. 2-A and 2-B there can be recognized in detail the elements that make it possible to fasten the accommodation 2 to the tub 1 of the clothes washing machine according to the invention in two possible different embodiments: the first one with a closing cap, or lid 7A provided with connecting brackets 8.3 and 8.4 and the second one with a closing cap, or lid 7B, without said brackets.

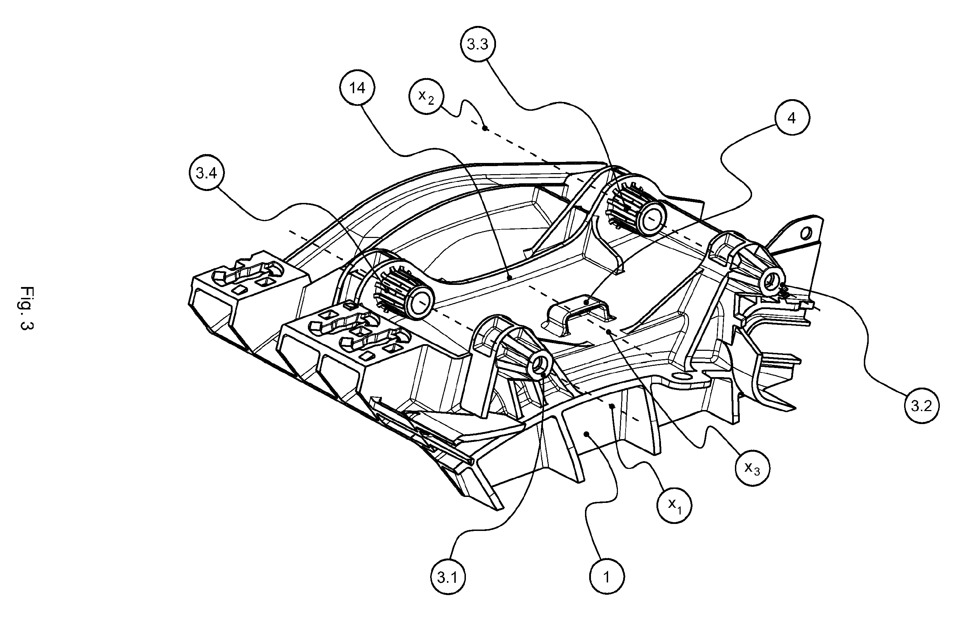

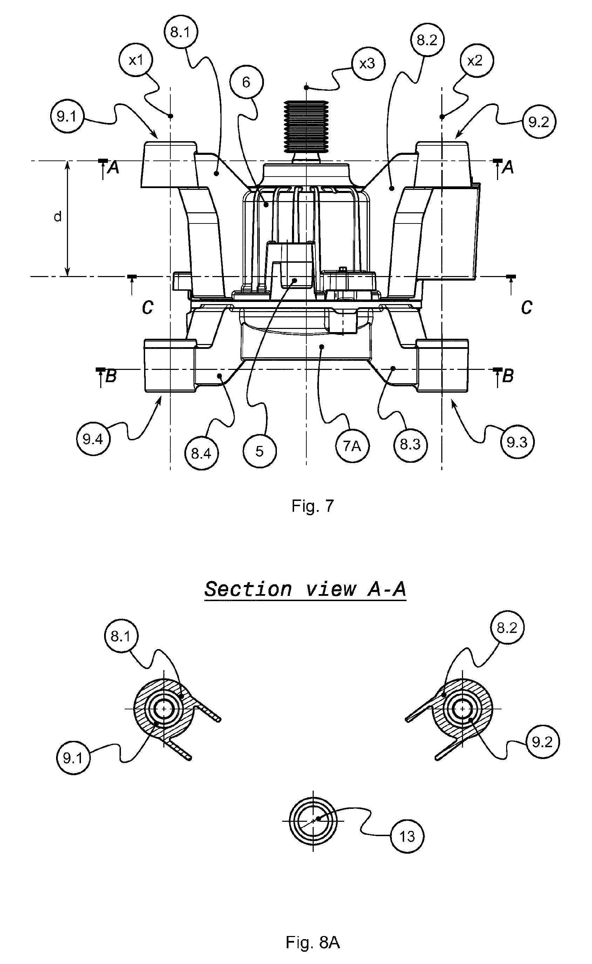

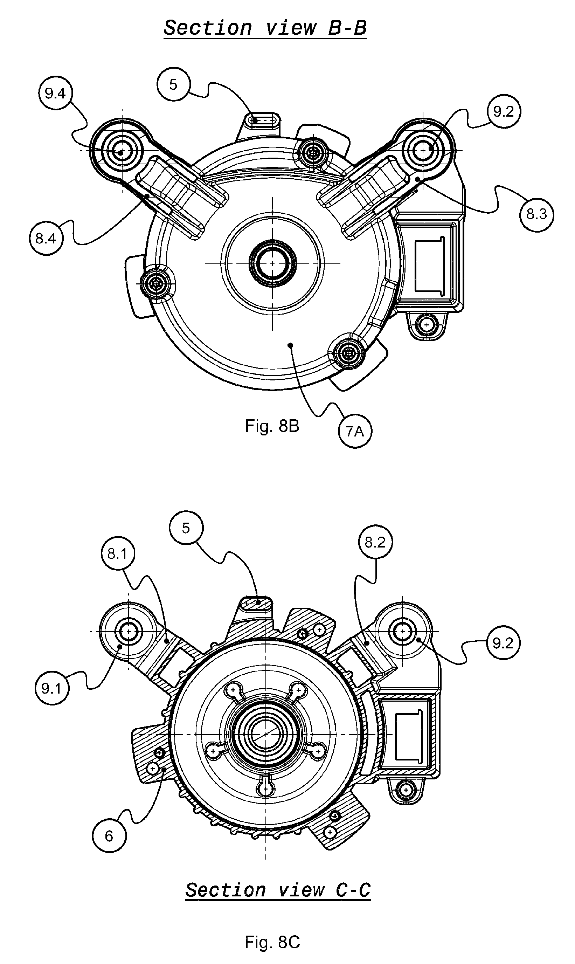

On the outer surface of said tub 1 there are provided two pairs of fixing elements 3.1, 3.2 and 3.3, 3.4, the second of which is provided on a small support frame 14. The dimensions of the fixing elements 3.1, 3.2, 3.3 and 3.4, shown in Fig. 3, and the distances which separate them respect the values used by the embodiments of the known technique so as to be capable of accommodating also motors made according to the previous standards and the aligning axes *x₁, x₂* of the pairs of fixing elements 3.1 - 3.4 and 3.2 - 3.3 are parallel to the rotation axis of the motor in the accommodation 2. Moreover, as shown in the sections of Figs 7 and 8A, 8B and 8C, the planes orthogonal to the principal axis of the accommodation 2 for the motor passing through the seat 9.1 - 9.2 (seen in sect. A-A) and the protrusion 5 (seen in sect. C-C) are arranged between them at a not null distance "d" so that the protrusion 5 acts as a resistance point. Should the configuration shown in Fig. 2-A be adopted, the anchor points pointed out in the sectional view B-B produce a further contribution to said resistant lever.

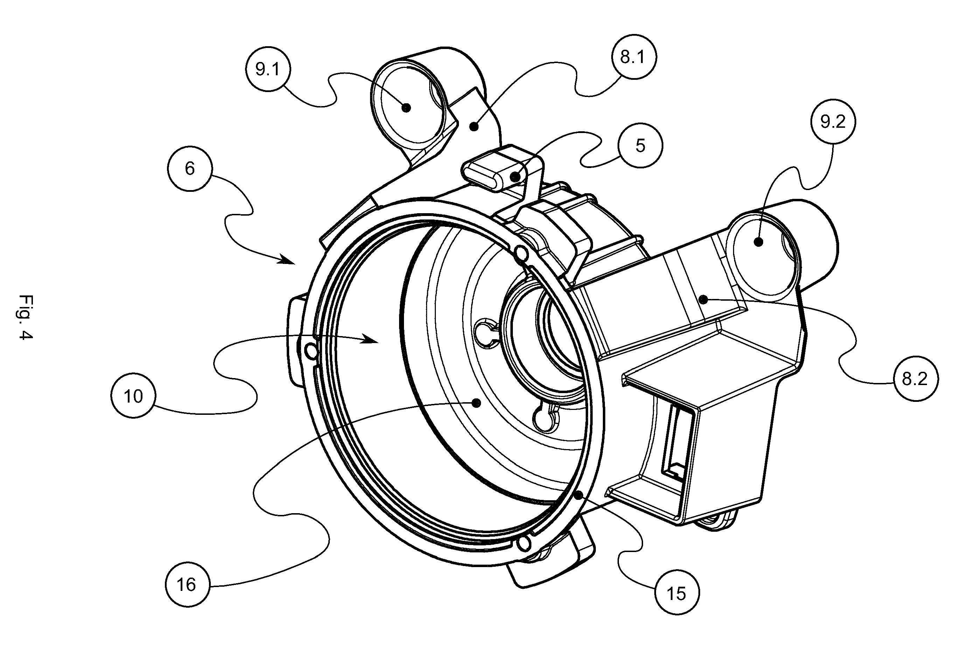

A seat 4, provided on the lateral surface of the tub 1, is an active part and characteristic of the utility model according to the invention, acting as fixing element for a principal body 6 of the accommodation 2 for the motor. In fact, in said seat 4 it is inserted in a bayonet mount, along axis *x₃*, a protrusion 5 provided on the principal body of the accommodation 2 and it contributes to the anchoring at the lateral surface of the tub 1. The transverse section of said protrusion 5, shown in Fig. 4, gradually reduces itself so as to form a wedge which engages against the walls of the seat 4.

Both the seat 4 and the protrusion 5 are characterizing elements of the present utility model. In fact, in the known technique, the motor support is usually made of two half-shells provided with support brackets which fasten the electric motor to the tub 1.

In the present invention, the accommodation 2 for the motor too has two parts, however it differs in its structure which meets the new operating principle: in fact it is constituted by a principal body 6 and a closing cap, or lid 7A or 7B.

The principal body 6 is the element through which the accommodation is fastened to the tub 1, it has one of the head faces open and the volume of chamber 10 in said principal body 6 is such so as to contain electric motors of various dimensions which can alternatively be installed in order to meet different power requirements of various models of clothes washing machines. There are provided some connecting elements for securing the position of the smaller motors so that the rotation axis of the motor shaft 13 of each model coincides with the longitudinal axis of the accommodation 2 for the motor; this design choice is made in order to keep constant the distance between the rotation axis of the shaft 13 of the motor 26 and that of the shaft 23 of the washing drum. Moreover, this choice makes it possible to use standard components for the other elements of the transmission mechanism which are not relevant for the purposes of the present invention.

On the closed side of the principal body 6 there are provided, integral with the same body, some connecting brackets, preferably 2 8.1 and 8.2, which, together with the protrusion 5 previously described, make it possible the fastening of the accommodation 2 for the motor to the tub 1; the connecting brackets 8.1 and 8.2 by means of the grooves 9.1 and 9.2 provided on the respective ends engage on the corresponding fixing elements 3.1 and 3.2.

As previously said, the proposed solution of the present utility model gives the support function to the principal body 6 of the accommodation 2 for the motor, consequently the closing cap, or lid 7A or 7B can be made of a lighter structure and also with materials capable of supporting minor mechanical stresses, with the result of a further containment of the above mentioned production costs. It is therefore sufficient that on the closing cap, or lid 7A or 7B there is provided a chamber to house a bearing 12 which, as shown in Fig. 6, together with the other bearing 11 supports the shaft 13 of the electric motor.

The drawing in Fig. 6 shows, in a sectional view, the operation principle of the proposed invention, in the embodiment with the closing cap or lid 7B. The method applies also to the solution with the closing cap, or lid 7A. The stabilization of the position of the accommodation 2 for the motor with respect to the tub 1 is achieved by means of three fastening points. Two of these are obtained inserting the respective fastening elements 3.1, 3.2 in the grooves 9.1, 9.2 and secured into position by means of suitable fastening means, known in the technique, such as screws. Said fastening means apply to the principal body 6 of the accommodation 2 a thrust action S, transferred to the protrusion 5 which engages in the seat 4. The walls of the seat 4 oppose a resistant force on the protrusion 5 surface hence making it possible to block the accommodation 2 for the motor in the set position by means of the contrast of forces.

It is to note that the constructional choices made enable to carry out both the insertion of the motor 26 into the accommodation 2, and the installation of said accommodation 2 on the tub 1 by means of only rectilinear translation movements which have a further advantage during the mounting operations.

The adoption of this invention has further advantages; the protrusion 5 enables a precise automatic alignment of the accommodation 2 during the mounting step, besides all the operations related to the connection of the accommodation 2 and to the installation of the motor can occur moving the components in a direction parallel to the principal axis of the accommodation 2.

Although the foregoing description of the invention is referred to a washing machine, the solution is applicable to driers or to dishwashers as well.

## Claims

1. Apparatus for fastening an electric motor (26) to the tub (1) of a washing machine, the apparatus comprising:
- an accommodation (2) apt at containing said electrical motor (26);
- bearings (11, 12), installed on the head surface of said accommodation (2), apt at keeping in position the shaft (13) of the motor (26);
- one or more connecting brackets (8.1, 8.2, 8.3 or 8.4) apt at firmly engaging said accommodation to the tub and provided at their ends with respective grooves (9);
- pairs of fastening elements (3.1, 3.2, 3.3, and 3.4) made integral on the surface of the tub (1) wherein said connecting brackets engage by means of said grooves (9.1, 9.2, 9.3, 9.4);
- at least a small support frame (14) provided on the outer surface of said tub (1) apt at supporting at least a pair of fastening elements (3.1, 3.2, 3.3, 3.4);
- **characterized in that**:
- said tub (1) is provided with a seat (4) on its lateral surface;
- the accommodation (2) is composed of a principal body (6) having dimensions such as to contain a chamber (10) capable of housing the whole electric motor (26) and of a closing cap, or lid (7A or 7B);
- said principal body (6) is made en bloc and comprises a protrusion 5 provided on its lateral outer surface, apt at engaging with said seat (4);
- said connecting brackets, preferably two (8.1, 8.2), are integral with the lateral outer surface of said principal body (6).

2. Apparatus for fastening a motor to the tub of a washing machine according to claim 1, **characterized in that:**
- the alignment axis (x1) between a first pair of fastening elements (3.1, 3.4) and the respective grooves (9.1-9.4) and the alignment axis (*x₂*) of a second pair of fixing elements (3.2, 3.3) and the respective grooves (9.2-9.3) are parallel to the insertion axis (*x₃*) of said protrusion 5 in said seat (4).

3. Apparatus for fastening a motor to the tub of a washing machine according to claim 2, **characterized in that:**
- the plane passing through said grooves (9.1-9.2) and orthogonal to the rotation axis of the motor (26) is placed at a determined distance (d) at the end of the protrusion (5).

4. Apparatus for fastening a motor to the tub of a washing machine according to any of the previous claims, **characterized in that:**
- said closing cap, or lid (7A) is provided with at least one or more connecting brackets made *en bloc* (8.3, 8.4) and that the respective grooves (9.3, 9.4) are apt at engaging on the corresponding said fastening elements (3.3, 3.4).
